# EUROPEAN PATENT SPECIFICATION

(11) **EP 0 669 388 B1**
(45) Date of publication and mention of the grant of the patent: **20.01.1999**
(21) Application number: 94100421.0
(22) Date of filing: 22.05.1990
(51) Int. Cl.: C10G 1/10

(54) **Recovery of commercially valuable products from used rubber tires**
Wiedergewinnung von wirtschaftlich wertvollen Produkten aus Altgummireifen
Récuperation de produits de valeur commerciale à partir de pneumatiques usés en caoutchouc

(30) Priority: 19.05.1989 CA 600208
(43) Date of publication of application: 30.08.1995
(73) Proprietor: UNIVERSITE LAVAL, Quebec, Quebec G1K 7P4 (CA)
(72) Inventor: Roy, Christian, Sillery, Quebec G1T 2M4 (CA)
(74) Representative: Casalonga, Axel

(56) References cited:
- FR-A- 2 192 163
- GB-A- 1 481 353
- US-A- 4 740 270

## Description

The present invention relates to improvements in the field of tire recycling. More particularly, the invention is directed to the recovery of commercially valuable products from used rubber tires.

Tire recycling has become a necessity because of the accumulation of large quantities of scrap tires which represents a major environmental problem. Each year, about 24 million used rubber tires are disposed of in Canada and about 250 million in the United States. While some of these tires are recapped or ground up for special uses, most are simply dumped in rural farm land or in landfill sights.When buried in landfills they eventually float to the surface, and when piled the non-biodegradable rubber will cause serious damage if ignited by lightning or vandals.

On the other hand, used rubber tires represent a source of energy and raw products for the production of rubber parts. By thermal decomposition of rubber, it is possible to recover to a certain extent the initial ingredients which constitute a tire. To this end, Applicant has already proposed in U.S. Patent No. 4,740,270 a process for the treatment of used rubber tires by vacuum pyrolysis in a reactor to produce liquid and gaseous hydrocarbons and a solid carbonaceous material. According to this process, the pyrolysis of the tires is carried out at a temperature in the range of about 360° C to about 415° C, under a subatmospheric pressure of less than about 4.66 kPa (35 mm Hg) and such that gases and vapors produced in the reactor have a residence time of the order of a few seconds. As a result, pyrolytic oils are obtained in substantiallly maximum yield. Typically, about 60 weight % hydrocarbon oils, about 38 weight % solid carbonaceous material and about 2 weight % gaseous hydrocarbons can be produced by such a process. As indicated in Applicant's aforementioned patent, the hydrocarbon oils produced have a calorific value of about 10,200 kcal kg ⁻¹ and are thus suitable for use as heating fuel. However, it would be desirable to increase the value of these pyrolytic oils with a view to obtaining commercially valuable chemicals.

It is therefore an object of the present invention to extract commercially valuable chemicals from tire-derived pyrolytic oils.

It is another object of the invention to recover other commercially valuable products from used rubber tires.

According to one aspect of the invention, there is provided a method of extracting commercially valuable chemicals from tire-derived pyrolytic oils, which comprises subjecting the pyrolytic oils to a fractional distillation at a temperature of up to about 204° C under atmospheric pressure to isolate at least one commercially valuable chemical selected from the group consisting of paraffins, naphthenes, olefins and aromatics.

Preferably, the method of the invention involves two fractional distillations and thus comprises the steps of:
a) subjecting the pyrolytic oils to a fractional distillation at a temperature of up to about 204° C under atmospheric pressure;
b) recovering a fraction boiling in the range of about 43° C to about 204 °C; and
c) subjecting the fraction to a further fractional distillation to isolate at least one commercially valuable chemical selected from the group consisting of paraffins, naphthenes, olefins and aromatics.

Applicant has found quite unexpectedly that the distillation fraction boiling below 204° C obtained by fractional distillation of tire-derived pyrolytic oils contains commercially valuable chemicals. The PONA analysis of such a fraction which constitutes about 27 weight % of the pyrolytic oils gave about 25 weight % paraffins, about 7 weight % naphthenes, about 43 weight % olefins and about 25 weight % aromatics. It has a calorific value of about 43,700 Jg ⁻¹.

Particularly interesting compounds identified in the above distillation fraction are benzene (b.p. 80. 1° C), toluene (b.p. 110.6° C), o-xylene (b.p. 144.4° C), m-xylene (b.p. 139.1° C), p-xylene (b.p. 138.3° C) and styrene (b.p. 145.2 ° C). These compounds can be used as solvents and petrochemical feedstock in the synthesis of various polymers. For example, styrene is mainly used in the production of plastics, rubber and resins. Xylene is particularly useful in the production of polyester fibers; it is also used as solvent and starting material in the production of benzoic and isophthalic acids. Toluene is also used for the production of benzoic acid.

Another compound of interest identified in the fraction boiling below 204°C is dl-limonene (b.p.178°C) which constitutes the major component of the fraction. The presence of dl-limonene is totally unexpected since this compound is a terpene which is usually derived from essential oils such as lemon and orange oils. It is mainly used as a flavoring agent in the food and fragrance industries.

Thus, by carrying out the fractional distillation of the pyrolytic oils to recover a fraction boiling in the range of about 70°C to about 204°C, it is possible to concentrate in such a fraction the above commercially valuable chemicals. This distillation fraction can typically contain about 3 weight % benzene, about 8 weight % toluene, about 7 weight % xylene, about 6 weight % styrene and about 17 weight % dl-limonene.

The present invention therefore provides, in another aspect thereof, a distillation fraction boiling in the range of about 43°C to about 204°C, preferably from about 70°C to about 204°C, under atmospheric pressure and obtained by fractional distillation of tire-derived pyrolytic oils produced by vacuum pyrolysis of rubber tires at a temperature in the range of about 360°C to about 415°C and under a subatmospheric pressure of less than about 4.66 kPa (35 mm Hg). Such a fraction comprises dl-limonene in an amount greater than the individual amounts of other components present in the fraction.

According to a further aspect of the invention, there is also provided a method of extracting dl-limonene from a distillation fraction boiling in the range of about 43°C to about 204°C, preferably from about 70°C to about 204°C, under atmospheric pressure and obtained by fractional distillation of tire-derived pyrolytic oils, which comprises subjecting the fraction to a fractional distillation at a temperature of about 178°C under atmospheric pressure to isolate dl-limonene.

The tire-derived pyrolytic oils used in accordance with the invention therefore constitute a source of commercially valuable chemicals and thus enable the vacuum pyrolysis of used rubber tires to become a commercially attractive solution to the problems created by the accumulation of large quantities of scrap tires.

Further features and advantages of the invention will become more readily apparent from the following non-limiting examples.

### EXAMPLE 1

Used rubber tires in the form of cuttings were treated by vacuum pyrolysis in accordance with Example No. 5 of U.S. Patent No. 4,740,270 to produce 61.2 weight % hydrocarbon oils, 36.6 weight % char and 2.2 weight % gases. These pyrolytic oils were then subjected to a fractional distillation by slowly heating the oils up to a temperature of about 204°C under atmospheric pressure and recovering a fraction boiling in the range of about 43°C to about 204°C. This fraction which constituted about 26.8 weight % of the pyrolytic oils was subjected to a further fractional distillation to isolate the major components thereof. The The results are reported in the following Table 1:

**TABLE 1**

| Components | Weight % (∗) |
|---|---|
| Methylpentene | 1.44 |
| Dimethylpentane | 1.04 |
| Benzene | 2.54 |
| 2,4,4-Trimethyl-1-pentene | 1.43 |
| Dimethylcyclopentadiene | 1.58 |
| Toluene | 6.95 |
| Cyclopentanone | 1.00 |
| 4-Vinyl-1-cyclohexene | 1.66 |
| o-Xylene | 0.91 |
| m-Xylene | 2.43 |
| p-Xylene | 2.78 |
| Styrene | 5.44 |
| α -Methylstyrene | 1.23 |
| dl-Limonene | 14.92 |

| | |
|---|---|
| (∗) based on the total mass of the fraction. | |

As it is apparent from Table 1, the compounds of interest, namely benzene, toluene, xylene, styrene and d1-limonene, are present in the fraction boiling in the range of 43-204°C, in relatively important quantities.

### EXAMPLE 2

The procedure of Example 1 was repeated, except that a fraction boiling in the range of about 70 °C to about 204°C was recovered. This fraction was subjected to a further fractional distillation to isolate benzene, toluene, xylene, styrene and dl-limonene. The results are reported in the following Table 2.

**TABLE 2**

| Components | Weight % (∗) |
|---|---|
| Benzene | 2.8 |
| Toluene | 7.7 |
| o-Xylene | 1.0 |
| m-Xylene | 2.7 |
| p-Xylene | 3.1 |
| Styrene | 6.1 |
| dl-Limonene | 16.6 |

| | |
|---|---|
| (∗) based on the total mass of the fraction. | |

As it is apparent from Table 2, by carrying out the fractional distillation of the pyrolytic oils to recover a fraction boiling in the range of 70-204°C, it is possible to concentrate in such a fraction the above commercially valuable chemicals.

## Claims

1. A distillation fraction boiling in the range of about 43°C to about 204°C under atmospheric pressure and obtained by fractional distillation of pyrolytic oils produced by vacuum pyrolysis of rubber tires at a temperature in the range of about 360°C to about 415°C and under a subatmosphereic pressure of less than about 4.66 kPa (35 mm Hg), said fraction comprising dl-limonene in an amount greater than the individual amounts of other components present in said fraction.

2. A distillation fraction according to claim 1, containing about 25 weight % paraffins, about 7 weight % naphthenes, about 43 weight % olefins and about 25 weight % aromatics.

3. A distillation fraction according to claim 1 or 2, boiling in the range of about 70°C to about 204°C under atmospheric pressure.

4. A distillation fraction according to claim 3, containing about 3 weight % benzene, about 8 weight % toluene, about 7 weight % xylene, about 6 weight % styrene and about 17 weight % dl-limonene.

5. A distillation fraction according to any one of claims 1 to 4, having a calorific value of about 43,700 Jg⁻¹.

6. A method of extracting dl-limonene from a distillation fraction according to any one of claims 1-5, which comprises subjecting the fraction to a fractional distillation at a temperature of about 178°C under atmospheric pressure to isolate dl-limonene.

## Patentansprüche

1. Destillationsfraktion, siedend in dem Bereich von etwa 43° C bis etwa 204° C unter atmosphärischem Druck und erhalten durch fraktionierte Destillation von pyrolytischen Ölen, welche durch Vakuumpyrolyse von Gummireifen bei einer Temperatur im Bereich von etwa 360° C bis etwa 415° C und unter einem unteratmosphärischem Druck von weniger als etwa 4,66 kPa (35 mm Hg) erhalten wurden, wobei diese Fraktion dl-Limonen in einer größeren Menge als die individuellen Mengen von anderen in dieser Fraktion vorhandenen Komponenten umfaßt.

2. Destillationsfraktion nach Anspruch 1, enthaltend etwa 25 Gew.-% Paraffine, etwa 7 Gew.-% Naphthene, etwa 43 Gew.-% Olefine und etwa 25 Gew.-% aromatische Verbindungen.

3. Destillationsfraktion nach Anspruch 1 oder 2, siedend in dem Bereich von etwa 70° C bis etwa 204° C unter atmosphärischem Druck.

4. Destillationsfraktion nach Anspruch 3, enthaltend etwa 3 Gew.-% Benzol, etwa 8 Gew.-% Toluol, etwa 7 Gew.-% Xylol, etwa 6 Gew.-% Styrol und etwa 17 Gew.-% dl-Limonen.

5. Destillationsfraktion nach einem der Ansprüche 1 bis 4, die einen Heizwert von etwa 43.700 Jg⁻¹ hat.

6. Verfahren zur Extraktion von dl-Limonen aus einer Destillationsfraktion nach einem der Ansprüche 1 bis 5, welche das Unterwerfen der Fraktion einer fraktionierten Destillation bei einer Temperatur von etwa 178° C unter atmosphärischem Druck zur Isolierung von dl-Limonen umfaßt.

## Revendications

1. Fraction de distillat bouillant dans l'intervalle allant d'environ 43 °C à environ 204 °C sous la pression atmosphérique, obtenue par distillation fractionnée d'huiles de pyrolyse produites par pyrolyse sous vide de pneumatiques en caoutchouc, à une température située dans l'intervalle allant d'environ 360 °C à environ 415 °C et sous une pression sub-atmosphérique, inférieure à environ 4,66 kPa (35 mmHg), ladite fraction contenant du dl-limonène en une quantité supérieure aux quantités individuelles des autres composants présents dans ladite fraction.

2. Fraction de distillat conforme à la revendication 1, contenant environ 25 % en poids de paraffines, environ 7 % en poids de naphtènes, environ 43 % en poids d'oléfines et environ 25 % en poids de composés aromatiques.

3. Fraction de distillat conforme à la revendication 1 ou 2, bouillant dans l'intervalle allant d'environ 70 °C à environ 204 °C sous la pression atmosphérique.

4. Fraction de distillat conforme à la revendication 3, contenant environ 3 % en poids de benzène, environ 8 % en poids de toluène, environ 7 % en poids de xylène, environ 6 % en poids de styrène et environ 17 % en poids de dl-limonène..

5. Fraction de distillat conforme à l'une des revendications 1 à 4, dont le pouvoir calorifique vaut environ 43 700 J/g.

6. Procédé d'extraction du dl-limonène d'une fraction de distillat conforme à l'une des revendications 1 à 5, lequel procédé comporte le fait de soumettre ladite fraction à une distillation fractionnée, à une température d'environ 178 °C et sous la pression atmosphérique, afin d'isoler le dl-limonène.
